# EUROPEAN PATENT APPLICATION

(11) **EP 1 167 458 A1**
(43) Date of publication of application: **02.01.2002**
(21) Application number: 00900882.2
(22) Date of filing: 24.01.2000
(51) Int. Cl.: C08L 101/06, C09D 201/06, C08K 5/17, C08F 20/38

(54) **COMPOSITION CONTAINING COMPOUND HAVING DITHIOCARBONATE GROUP**

(30) Priority: 27.01.1999 JP 1789199
(71) Applicant: Kyowa Yuka Co., Ltd., Tokyo 100-8185 (JP)
(72) Inventor: Murayama, Toshikazu, Kyowa Yuka Co. Ltd., Yokkaichi-shi, Mie 510-0022 (JP); Gonno, Akihiro, Kyowa Yuka Co. Ltd., Yokkaichi-shi, Mie 510-0022 (JP); Ikuta, Masanori, Kyowa Yuka Co. Ltd., Yokkaichi-shi, Mie 510-0022 (JP); Ito, Katsuhiro, Kyowa Yuka Co. Ltd, Yokkaichi-shi, Mie 510-0022 (JP); Murata, Shigeru, Kyowa Yuka Co. Ltd, Yokkaichi-shi, Mie 510-0022 (JP); MUTO, Kenji, Kyowa Yuka Co. Ltd, Yokkaichi-shi, Mie 510-0022 (JP)
(74) Representative: VOSSIUS & PARTNER
(86) International application number: JP0000311
(87) International publication number: WO0044832

(57) **Abstract**

A composition comprising a compound having at least one 5-membered-ring dithiocarbonate group represented by general formula (I): 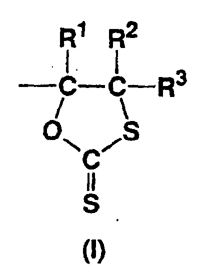 (in the formula, R¹, R², and R³ are identical or different, and represent a hydrogen atom or lower alkyl), and a secondary diamine represented by general formula (II): 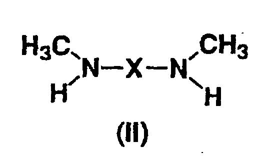 (in the formula, X represents alkylene having 4 to 20 carbon atoms) or an enamine derivative thereof is useful for use in coating materials, adhesives, inks, sealants, sealing agents, or the like.

## Description

### Technical Field

The present invention relates to a composition comprising a compound having a dithiocarbonate group which is useful for use in coating materials, adhesives, inks, sealants for building materials, sealing agents for semiconductors, or the like.

The present application is based on the Patent Application filed in Japan (Japanese Patent Application No. Hei 11 - 17891) and the contents of said Japanese Patent Application are incorporated herein as a part of the present specification.

### Background Art

A reactive polymer or compound having a 5-membered-ring dithiocarbonate (1,3-oxathiolane-2-thione) group in a molecular structure thereof is useful for various applications. It has been known that the above reactive polymers or compounds are useful for use in coating materials, adhesives, inks, sealants for building materials, sealing agents for semiconductors, or the like.

For example, Japanese Unexamined Patent Application No. Hei 9 - 59324 discloses a composition comprising a copolymer or compound having a 5-membered-ring dithiocarbonate group and an amine compound. Unfortunately, the composition comprising a copolymer having a 5-membered-ring dithiocarbonate group and N,N'-dimethyl-1,3-propanediamine, which is disclosed in the Example thereof, does not achieve satisfactory results for practical use with regard to the initial performance (hardening speed is slow) and the film obtained from the composition also does not afford satisfactory results for practical use with regard to solvent resistance.

In addition, Japanese Unexamined Patent Application No. Hei 7 - 62190 discloses an aqueous polymer composition comprising a vinyl copolymer having a 5-membered-ring dithiocarbonate group and a compound having two or more amino or imino groups. The Example thereof discloses 1,6-diaminohexane as a nucleophilic agent for the 5-membered-ring dithiocarbonate group. However, the composition comprising a vinyl copolymer having a 5-membered-ring dithiocarbonate group and 1, 6-diaminohexane does not afford satisfactory results for practical use with regard to weather resistance in the case of employing it as a constituent of an oil-soluble coating material or the like.

Furthermore, WO 98/24849 discloses a composition comprising a copolymer or compound having a 5-membered-ring dithiocarbonate group and a ketimine derivative, an enamine derivative, or an aldimine derivative. Unfortunately, the composition comprising a copolymer having a 5-membered-ring dithiocarbonate group and a ketimine derivative of N,N'-dimethyl-1,3-propanediamine, which is disclosed in the Example thereof, does not achieve satisfactory results for practical use with regard to the initial performance (hardening speed is slow) and the film obtained by the composition also does not afford satisfactory results for practical use with regard to solvent resistance.

### Disclosure of the Invention

The present invention provides a composition comprising a compound having at least one 5-membered-ring dithiocarbonate group represented by general formula (I): 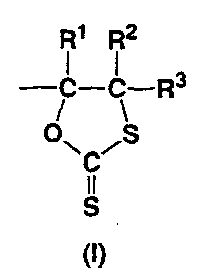 (in the formula, R¹, R², and R³ are identical or different, and represent a hydrogen atom or lower alkyl), and a secondary diamine represented by general formula (II): 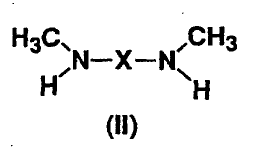 (in the formula,X represents alkylene having 4 to 20 carbon atoms) or an enamine derivative thereof.

In addition, the present invention also provides a coating material comprising the above composition, as well as a hardened product obtained by hardening the above composition.

### Best Modes For Carrying Out the Invention

In the definition of each group of R¹, R², and R³ in the general formula (I), examples of the lower alkyl may include straight-chain or branched alkyl groups having 1 to 6 carbon atoms, and among them, the alkyl groups having 1 to 4 carbon atoms are preferred. Here, as an example of the lower alkyl groups, mention may be made of methyl, ethyl, propyl, isopropyl, butyl, isobutyl, t-butyl, pentyl, isopentyl, neopentyl, hexyl, or the like.

The compound having at least one 5-membered-ring dithiocarbonate group may be a polymer having at least one 5-membered-ring dithiocarbonate group. Examples of a polymer having at least one 5-membered-ring dithiocarbonate group represented by the general formula (I) may include a vinyl polymer, a polyester resin, an alkyd resin, a polyamide resin, a polyester resin, a polyurethane resin, a copolymer formed by chemically binding these resins to each other, and the like. Among them, a vinyl copolymer including a structural unit represented by general formula (III): 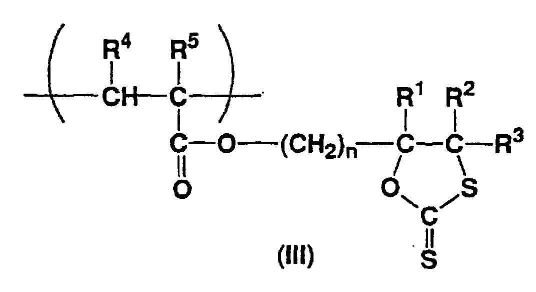 (in the formula, R¹, R², and R³ have the same definitions as described above, R⁴ and R⁵ are identical or different, and represent a hydrogen atom or lower alkyl, and n represents an integer of 1 to 4) is preferable. Here, the lower alkyl has the same definition as described above.

As an example of the other vinyl monomers to be copolymerized with a monomer having a 5-membered-ring dithiocarbonate group, which is a raw material of the vinyl copolymer having at least one 5-membered-ring dithiocarbonate group, mention may be made of (meth) acrylic acid, maleic acid, fumaric acid, itaconic acid, crotonic acid, monomethyl itaconate, methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, styrene, vinyltoluene, α-methylstyrene, dimethylstyrene, divinylbenzene, N-methylol (meth)acrylamide, (meth)acrylamide, (meth)acrylonitrile, vinyl acetate, vinyl propionate, monoethyl maleate, monobutyl maleate, diethyl maleate, dibutyl maleate, diethyl fumarate, dibutyl fumarate, diethyl itaconate, 2-hydroxyethyl (meth)acrylate, 2-hydroxypropyl (meth)acrylate, polyethylene glycol mono(meth)acrylate, polypropylene glycol mono(meth)acrylate, glycidyl (meth)acrylate, dimethylaminoethyl (meth)acrylate, diethylaminoethyl (meth)acrylate, methyl vinyl ether, ethyl vinyl ether, butyl vinyl ether, allyl alcohol, allyl alcohol ester, vinyl chloride, vinylidene chloride, fluoroethylene, chlorofluoroethylene, butadiene, or the like. Among them, an alkyl ester of (meth)acrylic acid such as methyl (meth)acrylate, ethyl (meth)acrylate, butyl (meth)acrylate, isobutyl (meth)acrylate, t-butyl (meth)acrylate, or 2-ethylhexyl (meth)acrylate may be preferably employed.

In the above description, (meth)acrylic acid means acrylic acid and methacrylic acid, and the other (meth) acrylic acid derivatives have the meanings similar to that described above.

In addition, the vinyl polymer having at least one 5-membered-ring dithiocarbonate group may be modified by binding the other non-vinyl polymer thereto. As an example of the copolymers described above, mention may be made of a vinyl-modified epoxy resin (Japanese Unexamined Patent Application No. Sho 54 - 30249), a vinyl-modified polyester resin (Japanese Unexamined Patent Application No. Hei 1 - 129072), a vinyl-modified alkyd resin, a vinyl-modified urethane resin (Japanese Unexamined Patent Application No. Hei 1 - 301761), or the like. These resins may be prepared according to a known method (the methods described in the publications described above or the like).

In the polymer having at least one 5-membered-ring dithiocarbonate group, the structural unit having the 5-membered-ring dithiocarbonate group is preferably included in a proportion (based on monomer) ranging from 0.2 to 90% by mole.

In addition, the molecular weight of the polymer having at least one 5-membered-ring dithiocarbonate group is not particularly restricted. For example, in the case of employing the polymer for use in an oil-soluble coating material, the weight average molecular weight (Mw) is preferably in a range of 1,000 to 400,000, and the polymer having a Mw in a range of 5,000 to 200,000 may be more preferably employed.

In the following, a preparation method for the polymer having at least one 5-membered-ring dithiocarbonate group will be explained.

The polymer having at least one 5-membered-ring dithiocarbonate group can be prepared by polymerization or polycondensation of the corresponding monomers according to a known method (Japanese Unexamined Patent Application No. Hei 9 - 59324, or the like). The monomer having a 5-membered-ring dithiocarbonate group can be obtained by reacting an oxirane compound and carbon disulfide in the presence or absence of a solvent, and in the presence of an alkali halide such as lithium bromide, in a method similar to a known method [Japanese Unexamined Patent Application No. Hei 5 - 247027, or J. Org. Chem., 60, 473 (1995)].

In this case, carbon disulfide is employed preferably in an amount of 1.0 to 10 equivalents with respect to the epoxy group of the oxirane compound, and more preferably in an amount of 1.1 to 5 equivalents with respect to the epoxy group of the oxirane compound. As an example of the alkali halide, mention may be made of a chloride, a bromide, or an iodide of lithium, sodium, potassium, rubidium, cesium, beryllium, magnesium, calcium, strontium, or barium, or the like. Among them, lithium bromide is preferred. They are added preferably in an amount of 0.1 to 10% by equivalent, and more preferably in an amount of 0.2 to 5% by equivalent, with respect to the epoxy group of the oxirane compound. As a solvent, an ether type solvent such as tetrahydrofuran, dioxane, dioxolane, trioxane, diethyl cellosolve, dibutyl cellosolve, diethylcarbitol, or dibutylcarbitol, a ketone type solvent such as acetone, methyl ethyl ketone, methyl isobutyl ketone, or diethyl ketone, acetonitrile, dimethylformamide, N-methylpyrrolidone, dimethyl sulfoxide, or the like may be employed, and among them, tetrahydrofuran, acetone, or ethyl acetate are preferably employed. The reaction temperature is preferably in a range of 20 to 100°C.

In addition, the polymer having a 5-membered-ring dithiocarbonate group in a molecular structure may also be prepared by preliminarily obtaining a polymer having a functional group (a carboxyl group, a hydroxyl group, an amino group, or the like) according to a known method, followed by bonding the compounds having at least one 5-membered-ring dithiocarbonate group thereto as a pendant.

Furthermore, as an example of the copolymer preparation methods, mention may be made of a method of copolymerizing a monomer having at least one 5-membered-ring dithiocarbonate group in a molecular structure and another copolymerizable monomer, a method of graft-copolymerizing preliminarily synthesized single polymers or copolymers and another monomer, or a method of block-copolymerizing polymers after a copolymer is synthesized, or the like.

The polymerization reaction is carried out in the presence of a polymerization initiator in an amount of 0.5 to 5% by mole with respect to the monomer, for 1 to 24 hours at a temperature ranging from 0 to 100°C, for example, in the case of a radical polymerization of vinyl monomers.

In order to obtain an aqueous emulsified vinyl type polymer, a monomer may be emulsion-polymerized employing an emulsifier and a polymerization initiator in water, according to a known method (Japanese Unexamined Patent Application No. Sho 54 - 110248, or Japanese Examined Patent Application No. Sho 58 - 20991).

The polymer having at least one 5-membered-ring dithiocarbonate group may have an improved storage stability by means of having a core shell structure. The core shell type aqueous dispersion can be synthesized according to a known method (Japanese Unexamined Patent Application No. Sho 57 - 3850, Japanese Unexamined Patent Application No. Sho 61 - 136501, or Japanese Unexamined Patent Application No. Hei 5 - 70733).

In addition, the polymer having at least one 5-membered-ring dithiocarbonate group may be emulsified in water according to a known method.

The solvent for polymerization varies depending on the polymerization methods, and for example, in the case of radical polymerization, benzene, toluene, xylene, hexane, cyclohexane, ethyl acetate, butyl acetate, acetone, methyl ethyl ketone, methyl isobutyl ketone, diisobutyl ketone, cyclohexanone, methanol, ethanol, propanol, isopropanol, butanol, N-methylpyrrolidone, tetrahydrofuran, acetonitrile, methoxybutanol, methoxybutyl acetate, 3-methyl-3-methoxybutanol, ethylene glycol monobutyl ether, ethylene glycol monobutyl ether acetate, diethylene glycol monobutyl ether, diethylene glycol monobutyl ether acetate, propylene glycol monomethyl ether, dipropylene glycol monomethyl ether, propylene glycol monoethyl ether, propylene glycol monomethyl ether acetate, dipropylene glycol monomethyl ether acetate, 3-methyl-3-methoxy-1-butyl acetate, water, dimethylformamide, dimethylacetamide, dimethyl sulfoxide, or the like is employed. The amount of the solvent is not particularly restricted. The solvent may be employed commonly in an amount of 0.2 to 100 times by quantity with respect to the total amount of the monomers.

The polymerization initiator varies depending on the polymerization methods, and for example, in the case of solution radical polymerization, 2,2'-azobisisobutyronitrile, 2,2'-azobis-2-methylbutyronitrile, 2,2'-azobisvaleronitrile, benzoyl peroxide, acetyl peroxide, lauroyl peroxide, 1,1-bis(t-butylperoxy)-3,3,5-trimethylcyclohexane, t-butyl peroxy-2-ethylhexanoate, cumene hydroperoxide, t-butyl peroxybenzoate, t-butyl peroxide, methyl ethyl ketone peroxide, m-chloroperbenzoic acid, or the like may be employed. The amount of the polymerization initiator is not particularly restricted. The polymerization initiator may be employed commonly in an amount of 0.5 to 5% by mole with respect to the total amount of the vinyl monomers.

As the emulsifier for aqueous emulsion polymerization, an anionic emulsifier such as an alkylbenzene sulfonate, a nonionic emulsifier such as a polyethylene glycol alkylphenyl ether, a reactive emulsifier such as ELEMINOL JS-2 (produced by Sanyo Chemical Industries Ltd.), a polymer emulsifier wherein a hydrophilic moiety of a carbonate, a sulfonate, or the like is introduced into a polymer such as a vinyl type or polyester type polymer may be employed. The amount of the emulsifier is not particularly restricted. The emulsifier may be commonly employed in an amount of 0.1 to 10% by weight with respect to the total amount of the vinyl monomers. In addition, various protective colloids for emulsion stabilization, such as polyvinyl alcohol, cellulose, or the like may be simultaneously employed. As an example of the polymerization initiators in the case of emulsion polymerization, mention may be made of an ammonium, sodium, or potassium salt of persulfuric acid, an inorganic peroxide such as hydrogen peroxide, a redox type polymerization initiator such as hydrogen peroxide / a ferrous salt, a persulfuric salt / acidic sodium sulfite, or cumene hydroperoxide / N,N-dimethylaniline, a water-soluble azo compound such as 2,2'-azobis(2-amidinopropane) dihydrochloride, 2,2'-azobis[2-methyl-N-(2-hydroxyethyl)propionamide], or the like.

In order to obtain an aqueous dispersion by means of a method other than aqueous emulsion polymerization, a self-emulsification method wherein a tertiary amine salt of a carboxylic acid is introduced into the molecular structure of the polymer, an emulsification method employing an external emulsifier, or the like may be employed.

Furthermore, the polymer according to the present invention may also be prepared by reacting the polymer having an oxirane structure with carbon disulfide in the presence of an alkali halide such as lithium bromide, according to a known method [Japanese Unexamined Patent Application No. Hei 5-247027; or J. Org. Chem., 60, 473 (1995)], which is different from the preparation method described above.

In addition, in order to chemically bind the vinyl polymer to the polyester resin, a method wherein a vinyl polymer having a functional group such as a carboxyl group, a hydroxyl group, a glycidyl group, or the like, and a polyester resin having a glycidyl group, a hydroxyl group, a carboxyl group, or the like are preliminarily synthesized, and subsequently they are bonded by esterification (Japanese Unexamined Patent Application No. Hei 1 - 129072), or a method wherein an unsaturated polyester resin having a radical polymerizable functional group (a vinyl group, a conjugated double bond, or the like) is preliminarily synthesized, and subsequently the vinyl monomer is grafted thereto by radical polymerization, may be employed.

The compound having at least one 5-membered-ring dithiocarbonate group according to the present invention may not be a polymer, and as an example thereof, mention may be made of a dithiocarbonate compound derived from phenol, a dithiocarbonate compound derived from an alcohol, a dithiocarbonate compound derived from a carboxylic acid, or a compound obtained by reacting an oxirane compound such as a diphenylepoxy resin, ethylene oxide, propylene oxide, butylene oxide, triglycidyl isocyanulate, an epoxylated soy bean oil, an epoxylated soy bean oil fatty acid, or the like, with carbon disulfide. In particular, the hydroxy compound having a dithiocarbonate group, represented by general formula (IV): 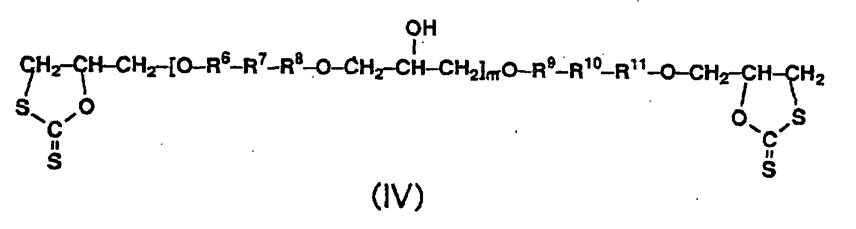 (in the formula, R⁶, R⁸, R⁹, and R¹¹ are identical or different, and represent phenylene wherein 1 to 4 hydrogen atoms may independently be substituted with a halogen atom, or cyclohexylene, R⁷ and R¹⁰ are identical or different, and represent methylene, C(CH₃)₂, an oxygen atom, carbonyl, a·sulfur atom, or SO₂, and m represents an integer of 1 to 40) is preferably employed.

In the definitions of the general formula (IV) described above, examples of the halogen atom include a fluorine atom, a chlorine atom, a bromine atom, and an iodine atom, and among them, the bromine atom is preferred.

The dithiocarbonate compound derived from phenol may be prepared, for example, by reacting a phenol compound such as resorcinol, hydroquinone, pyrocatechol, bisphenol A, dihydroxydiphenylmethane (bisphenol F), bisphenol S, tetrabromobisphenol A, 4,4'-dihydroxy-1,4-diphenylcyclohexane, 4,4'-dihydroxy-1,3-diphenylcyclohexane, 4,4'-dihydroxy-3,3'-dimethyldiphenylmethane, 4,4'-dihydroxybenzophenone, tris(4-hydroxyphenyl)methane, bis (4-hydroxyphenyl)ether, novolak phenol, novolak cresol, bis(4-hydroxyphenyl)sulfone, bis(3,5-dimethyl-4-hydroxphenyl) sulfone, or a hydrogenated product or a halide of the compound described above, with epichlorohydrine to obtain a glycidyl ether, followed by a reaction between the glycidyl ether and carbon disulfide.

As the dithiocarbonate compound derived from an alcohol, a compound obtained by reacting an alcohol such as methanol, ethanol, propanol, butanol, octanol, nonanol, isodecanol, ethylene glycol, propylene glycol, neopentyl glycol, glycerol, trimethylol propane, pentaerythritol, dipentaerythritol, 2-butyl-2-ethyl-1,3-propanediol, 2,2-diethyl-1,3-propanediol, 3-methyl-1,5-pentanediol, 2,4-diethyl-1,5-pentanediol, or 1,9-nonanediol, with epichlorohydrine to obtain a glycidyl ether, followed by a reaction between the glycidyl ether and carbon disulfide may be mentioned.

The dithiocarbonate compound derived from a carboxylic acid may be prepared, for example, by reacting acetic acid, propionic acid, butyric acid, stearic acid, adipic acid, phthalic acid, or the like with epichlorohydrine to obtain a glycidyl compound, followed by a reaction between the glycidyl compound and carbon disulfide.

The compound having at least one 5-membered-ring dithiocarbonate group may be prepared by reacting the oxirane compound which corresponds to the desired product with carbon disulfide in the presence of an alkali halide such as lithium bromide, as described above, according to a known method [Japanese Unexamined Patent Application No. Hei 9 - 59324; or J. Org. Chem., 60, 473 (1995)].

For example, the hydroxy compound represented by the general formula (IV) may be prepared by reacting the corresponding epoxy resin which is commercially available (E-1001 to 1007, produced by Yuka Shell Epoxy Corporation) with carbon disulfide in the presence of an alkali halide such as lithium bromide, in a manner similar to that described above. In addition, in the case where the oxirane compound is not commercially available, it may be prepared by reacting a compound having a hydroxyl group with epichlorohydrine in the presence of a base, according to a known method (an ether synthesis method of Williamson, or the like).

In the following, the secondary diamine represented by the general formula (II) or the enamine derivative thereof will be explained.

The composition according to the present invention is characterized in that the secondary diamine represented by the general formula (II) or the enamine derivative thereof is added to the compound having at least one 5-membered-ring dithiocarbonate group described above. By virtue of employing the secondary diamine represented by the general formula (II) or the enamine derivative thereof, solvent resistance or weather resistance of the composition is improved where the composition is employed as a coating material.

Examples of the alkylene having 4 to 20 carbon atoms which X represents in the general formula (II) include straight-chain or branched alkylenes. As an example of the alkylenes, mention may be made of butylene, pentylene, hexylene, heptylene, octylene, nonylene, decylene, undecylene, dodecylene, tridecylene, tetradecylene, pentadecylene, hexadecylene, heptadecylene, octadecylene, nonadecylene, eicosylene, or the like.

As an example of the secondary diamine represented by the general formula (II) which is a component of the composition according to the present invention, mention may be made of N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-dimethyl-1,8-diaminooctane, N,N'-dimethyl-1,9-diaminononane, N,N'-dimethyl-1,10-diaminodecane, N,N'-dimethyl-1,11-diaminoundecane, N,N'-dimethyl-1,12-diaminododecane, N,N'-dimethyl-1,13-diaminotridecane, N,N'-dimethyl-1,14-diaminotetradecane, N,N'-dimethyl-1,15-diaminopentadecane, N,N'-dimethyl-1,16-diaminohexadecane, N,N'-dimethyl-1,17-diaminoheptadecane, N,N'-dimethyl-1,18-diaminooctadecane, N,N'-dimethyl-1,19-diaminononadecane, N,N'-dimethyl-1,20-diaminoeicosane, or the like.

In the secondary diamines represented by the general formula (II), the secondary diamines wherein X represents alkylene having 6 to 15 carbon atoms are preferable since they are superior in terms of solvent resistance. As an example of the preferred diamines, mention may be made of N,N'-dimethyl-1,6-diaminohexane, N,N'-dimethyl-1,7-diaminoheptane, N,N'-dimethyl-1,8-diaminooctane, N,N'-dimethyl-1,9-diaminononane, N,N'-dimethyl-1,10-diaminodecane, N,N'-dimethyl-1,11-diaminoundecane, N,N'-dimethyl-1,12-diaminododecane, N,N'-dimethyl-1,13-diaminotridecane, N,N'-dimethyl-1,14-diaminotetradecane, N,N'-dimethyl-1,15-diaminopentadecane, or the like.

Among the secondary diamines represented by the general formula (II), the secondary diamines wherein X positioned between both terminal nitrogen atoms in the general formula (II) represents alkylene having a straight-chain alkylene moiety having 4 to 12 carbon atoms are preferably employed, the diamines wherein X represents straight-chain alkylene having 4 to 12 carbon atoms are more preferably employed, and the diamines wherein X represents straight-chain alkylene having 6 to 10 carbon atoms are further more preferably employed. Here, the alkylene having a straight-chain alkylene moiety may have an alkyl side chain or no alkyl side chains.

These secondary diamines may be synthesized in a method similar to a known method, for example, the method described in Synthesis, 303 (1980), or alternatively, they are available as commercial products.

The composition according to the present invention may include the enamine derivative of the secondary diamine described above, instead of the secondary diamine. The enamine derivative may be synthesized from the secondary diamine described above and a ketone compound, according to a known method. As the ketone compounds, those having 3 to 15 carbon atoms may be mentioned, and preferably those having 3 to 12 carbon atoms may be mentioned. The examples thereof include an aliphatic ketone such as acetone, methyl ethyl ketone, methyl isobutyl ketone, or diisobutyl ketone, a cyclic ketone such as cyclohexanone, 2-methylcyclohexanone, or 2,6-dimethylcyclohexanone, an acetoacetic acid ester such as methyl acetoacetate or ethyl acetoacetate, acetyl acetone, acetonylbenzene, the derivatives of the compounds described above, and the like.

Upon synthesis of the enamine derivative, the ketone compound may be employed commonly in an amount of 0.5 to 5 equivalents, and preferably in an amount of 0.8 to 1.5 equivalents, with respect to the secondary diamine. The ketone compound may be employed in a large excessive amount, as a reactant and also as a solvent. The reaction between the secondary amine and the ketone compound may be carried out commonly at a temperature ranging from 30 to 200°C, and preferably at a temperature ranging from 50 to 150°C.

In the reaction between the secondary amine and the ketone compound, a catalyst may be employed. As an example of the catalysts, mention may be made of potassium carbonate, p-toluenesulfonic acid, acetic acid, or alternatively, zinc oxide, germanium oxide, aluminum silicate, or the like.

In addition, in order to remove water produced by the reaction efficiently, an azeotropic solvent may be employed. As the azeotropic solvent, for example, hexane, cyclohexane, benzene, toluene, xylene, or the like, or a mixture thereof may be employed.

After the reaction, purification may be carried out according to the conventional purification method which is commonly employed in organic synthesis, such as filtration, extraction, washing, drying, concentration, distillation, or the like.

The enamine derivative described above means a protected secondary diamine wherein one or two amino groups of the secondary diamine as a raw material are protected by a ketone compound. The protected secondary diamine wherein the two amino groups are protected is preferably employed.

In the composition according to the present invention, it is preferred that the secondary diamine or the enamine derivative thereof is employed in a molar ratio of the amino group or the imino group of the secondary diamine or the enamine derivative / the 5-membered-ring dithiocarbonate group ranging from 0.3 to 3.0, and preferably, ranging from 0.6 to 1.5. The amino group described above includes an amino group which is substituted with an alkyl or the like.

The composition according to the present invention is characterized by comprising a compound having at least one dithiocarbonate group and a secondary diamine or an enamine derivative thereof, and is obtained by uniformly dispersing and mixing both of them. Various solvents may be included therein, depending on the purposes of the composition. In this case, as the solvent, for example, the polymerization solvents described above may be employed alone or in combination of the two to four solvents thereof in an amount of 0.2 to 100 times by quantity (weight ratio) with respect to the copolymer of the present invention.

The composition according to the present invention comprises a compound having at least one 5-membered-ring dithiocarbonate group and a secondary diamine represented by the general formula (II) or an enamine derivative thereof, as described above. The composition (hardened product) wherein the ring of the 5-membered-ring dithiocarbonate group is opened by the reaction with the secondary diamine represented by the general formula (II) or the enamine derivative thereof, and the disulfide bond is produced by means of air oxidation or the like is also within the scope of the present invention.

The compositions according to the present invention are useful for use in coating materials, adhesives, inks, sealants, sealing agents, or the like.

In the case where the composition of the present invention is employed in the application of a coating material or an adhesive, a two-liquid type coating material or adhesive comprising an ingredient which includes a compound having at least one 5-membered-ring dithiocarbonate group and an ingredient which includes a secondary diamine represented by the general formula (II) may be formed, or alternatively, an one-liquid type coating material or adhesive comprising an aqueous dispersion such as an emulsion of the compound having at least one 5-membered-ring dithiocarbonate group may be formed. In addition, in the case where the compound having at least one 5-membered-ring dithiocarbonate group and the enamine derivative of the secondary diamine are employed, the composition may be employed as a one-liquid type coating material or adhesive which has superior storage stability.

The solution or suspension of the composition according to the present invention may be employed as a clear coating material or clear ink, without further modification. By means of adding pigments or dispersed pigments thereto, it may be employed as a colored coating material or colored ink. As a means of dispersing pigments, a conventional paint shaker, a ball mill, or the like may be employed.

In addition, the composition according to the present invention may include, if necessary, various UV-absorbers, antioxidants, hindered amine type photostabilizers, pigment dispersants, or the like. Furthermore, an alkyd resin, an acryl resin, a cellulose type resin, a petroleum resin, an epoxy resin, a plasticizer, a film-forming auxiliary, a dehydrating agent, or the like, each of which is commonly employed, maybe included therein, if necessary.

The composition according to the present invention shows a high hardening speed upon hardening, and exhibits the superior initial performance.

In the case where the composition of the present invention is employed for use in a coating material, as a coating method, conventional brush coating, spray coating, or the like may be employed, and a hardening condition may be selected from a broad range of drying conditions from drying at ambient temperature to drying with heating. In addition, as an example of the materials to be coated, mention may be made of a metal, a wood, plastics, an inorganic raw material, a concrete, an asphalt, or the like. The compositions of the present invention are useful in protecting raw materials or improving aesthetics by acting as a primer coating, an over coating, or a one-coat finishing agent.

The hardened products or films obtained by hardening the composition of the present invention are superior in hardness, strength, adhesiveness, water resistance, chemical resistance, weather resistance, contamination-protection, blocking resistance, or the like.

In the following, the modes of the present invention will be explained by referring to Examples, Reference Examples, and Test Examples.

### [Reference Example 1] Synthesis of a polymer having a 5-membered-ring dithiocarbonate group [Resin (A-1)]

In a flask equipped with a dropping device, a stirrer, a thermometer, a condenser tube, and an inlet tube for a nitrogen gas, 150 g of toluene was placed, and then the mixture was heated to 100°C. Subsequently, after the atmosphere in the flask was replaced with nitrogen, a mixture comprising 7.5 g of 5-(methacryloyloxymethyl) -1,3-oxathiolane-2-thione (MOT), 112 g of butyl methacrylate, 15 g of butyl acrylate, 15 g of styrene, and 0.5 g of 2,2'-azobis-2-methylbutyronitrile as a polymerization catalyst was added dropwise thereto over 2 hours. Furthermore, the reaction mixture was aged for 3 hours at 100°C to complete the polymerization, yielding a resin solution having a solid part in an amount of 50% by weight and having a weight average molecular weight of 46, 000. The weight average molecular weight was analyzed by means of gel permeation chromatography (GPC) according to the following method.

### (GPC analysis conditions)

Column: TSKgel Super HM-M (2 columns) and HM-H (one column) (produced by TOSOH Corporation) were connected serially.
Column retention temperature: 40°C
Detector: RI
Eluent: tetrahydrofuran (flow velocity 0.5 ml/min.)
Standard substance: polystyrene

### [Reference Example 2] Synthesis of a polymer having a 5-membered-ring dithiocarbonate group [Resin (A-2)]

In a flask equipped with the devices similar to those described in Reference Example 1, 340 ml of carbon disulfide was added dropwise to a solution prepared by dissolving 5 liters of tetrahydrofuran, 500 g of a bisphenol A - epichlorohydrine type epoxy resin (E-1001, produced by Yuka Shell Epoxy Corporation), and 25 g of lithium bromide, at 25°C. Subsequently, the inner temperature of the flask was heated to 45°C, and the reaction proceeded for 8 hours.

After the reaction, the reaction mixture was concentrated under reduced pressure. To the obtained residue, 5 liters of chloroform and 3 liters of water were added to carry out a separation. To an extracted organic layer, 5 liters of a saturated aqueous solution of sodium chloride was added, and again a separation was carried out. The obtained organic layer was dehydrated over 300 g of magnesium sulfate, and subsequently chloroform was distilled off, yielding 445 g of a crude product. The crude product in an amount of 400 g was purified by column chromatography on silica gel, thus yielding a purified product.

The results of NMR and IR analyses of the purified product are described below.

¹H-NMR (CDCl₃, δ ppm, 400 MHz): 1.63 (s, 18H), 2.52 (d, J = 5.1 Hz, 2H), 3.73 (dd, J = 7.1, 12.0 Hz, 2H), 3.78 (dd, J = 7.6, 8.0 Hz, 2H), 4.10 (dd, J = 5.6, 12.0 Hz, 4H), 4.13 (dd, J = 4.6, 8.0 Hz, 4H), 4.25 (dd, J= 5.6, 10.3 Hz, 2H), 4.30 (dd, J = 5.6, 10.3 Hz, 2H), 4.35 (q, J = 5.4 Hz, 2H), 5.42 (m, 2H), 6.81 (dd, J = 1.7, 8.8 Hz, 6H), 6.83 (dd, J = 2.0, 8.8 Hz, 6H), 7.13 (dd, J = 1.5, 8.0 Hz, 12 H)

IR (NaCl, cm⁻¹) : 508, 1184, 1241, 1606, 3037, 3442

### [Reference Example 3] Synthesis of an enamine derivative of N,N'-dimethyl-1,6-diaminohexane (B-1)

In a flask equipped with a stirrer, a thermometer, a Dean Stark trap, and an inlet tube for a nitrogen gas, 10 g of N,N'-dimethyl-1,6-diaminohexane, 68 g of cyclohexanone, and 200 g of toluene were placed and subsequently the mixture was heated and refluxed for 4 hours in a stream of nitrogen. The obtained reaction solution was concentrated under reduced pressure (40°C/1 mmHg) to remove the solvent and the unreacted raw materials, yielding 21 g of the desired enamine derivative (B-1). As a result of the FT-IR measurement of the obtained product, the absorption spectrum characterized by an -N-C=C-group was observed at 1643 cm⁻¹.

### [Reference Example 4] Synthesis of an enamine derivative of N,N'-dimethyl-1,3-diaminopropane (B-2)

In a manner similar to that described in Reference Example 3, with an exception that N,N'-dimethyl-1,3-diaminopropane in an amount of 7.1 g was employed in place of N,N'-dimethyl-1, 6-diaminohexane in Reference Example 3, synthesis was carried out, yielding 18 g of an enamine derivative (B-2). As a result of the FT-IR measurement of the obtained product, the absorption spectrum characterized by an -N-C=C- group was observed at 1643 cm⁻¹.

### [Example 1]

The resin (A-1) (20 g) obtained in Reference Example 1 was diluted in 5 g of toluene, and subsequently, 0.17 g of N,N'-dimethyl-1,6-diaminohexane was added thereto to prepare a clear paint (C-1).

### [Example 2]

The resin (A-1) (20 g) obtained in Reference Example 1 was diluted in 5 g of toluene, and subsequently, 0.20 g of N,N'-dimethyl-1,8-diaminooctane was added thereto to prepare a clear paint (C-2).

### [Example 3]

The resin (A-1) (20 g) obtained in Reference Example 1 was diluted in 5 g of toluene, and subsequently, 0.35 g of the enamine derivative (B-1) obtained in Reference Example 3 was added thereto to prepare a clear paint (C-3).

### [Example 4]

The resin (A-2) (10 g) obtained in Reference Example 2 was diluted in 10 g of toluene, and subsequently, 1.3 g of N,N'-dimethyl-1,6-diaminohexane was added thereto to prepare a clear paint (C-4).

### [Example 5]

The resin (A-2) (10 g) obtained in Reference Example 2 was diluted in 10 g of toluene, and subsequently, 2.5 g of the enamine derivative (B-1) obtained in Reference Example 3 was added thereto to prepare a clear paint (C-5).

### [Comparative Example 1]

The resin (A-1) (20 g) obtained in Reference Example 1 was diluted in 5 g of toluene, and subsequently, 0.12 g of N,N'-dimethyl-1,3-diaminopropane was added thereto to prepare a clear paint (C-6).

### [Comparative Example 2]

The resin (A-1) (20 g) obtained in Reference Example 1 was diluted in 5 g of toluene, and subsequently, 0.31 g of the enamine derivative (B-2) obtained in Reference Example 4 was added thereto to prepare a clear paint (C-7).

### [Comparative Example 3]

The resin (A-1) (20 g) obtained in Reference Example 1 was diluted in 5 g of toluene, and subsequently, 0.13 g of 1,6-diaminohexane was added thereto to prepare a clear paint (C-8).

### [Test Example 1]

The clear paint obtained in each of Examples 1 to 3 and Comparative Examples 1 and 2 was applied to a polished plate which had been treated with iron phosphate (produced by Japan Test Panel Co., Ltd.) by means of an applicator coater so as to have a dried film thickness of 30 microns. Test samples were prepared by drying it for 12 hours, 24 hours, 72 hours, and 168 hours at 23°C. An evaluation test described below was carried out.

MEK resistance: A cloth was soaked in methyl ethyl ketone (MEK), and a rubbing test was carried out using it while a 500 g load was exerted thereto. The number of strokes until the subject (coated material) appeared was recorded.

The results are shown in Table 1.

**Table 1**

| | Example 1 | Example 2 | Example 3 | Comparative Example 1 | Comparative Example 2 |
|---|---|---|---|---|---|
| Clear paint | C-1 | C-2 | C-3 | C-6 | C-7 |

| **Ingredients:** | | | | | |
|---|---|---|---|---|---|
| Resin | A-1 | A-1 | A-1 | A-1 | A-1 |
| Secondary amine or enamine derivative | N,N'-dimethyl -1,6-diamino-hexane | N,N'-dimethyl -1,8-diamino-octane | Enamine derivative of N,N'-dimethyl -1,6-diamino-hexane (B-1) | N,N'-dimethyl -1,3-diamino-propane | Enamine derivative of N,N'-dimethyl -1,3-diamino-propane (B-2) |

| **MEK resistance:** | | | | | |
|---|---|---|---|---|---|
| Drying for 12 hr. | 30 strokes | 28 strokes | 28 strokes | 5 strokes | 5 strokes |
| Drying for 24 hr. | 60 strokes | 52 strokes | 58 strokes | 35 strokes | 34 strokes |
| Drying for 72 hr. | 65 strokes | 55 strokes | 66 strokes | 40 strokes | 42 stokes |
| Drying for 168 hr. | 70 strokes | 60 strokes | 72 strokes | 46 strokes | 47 strokes |

The films obtained from the compositions (C-1), (C-2), and (C-3) according to the present invention are superior in solvent resistance (in particular, solvent resistance at the initial stage of hardening) as compared with the films obtained from the comparative compositions (C-6) and (C-7) according to Comparative Examples.

### [Test Example 2]

The clear paint obtained in each of Examples 3 and 5 was placed in a closed type glass container, and was allowed to stand for one month in a thermostatic chamber at 40°C, followed by assessment of the outer appearance and the fluidity thereof by visual observation. The results are shown in Table 2.

**Table 2**

| | | Example 3 | Example 5 |
|---|---|---|---|
| Clear paint | | C-3 | C-5 |
| Ingredients | Resin | A-1 | A-2 |
| | Secondary diamine or enamine derivative | Enamine derivative of N,N'-dimethyl-1,6-diaminohexane (B-1) | Enamine derivative of N,N'-dimethyl-1,6-diaminohexane (B-1) |
| Storage stability | | No thickening | No thickening |

It can be seen from Table 2 that in the case where the enamine derivative of the secondary diamine is employed, the composition according to the present invention may be employed as a one-liquid type coating material exhibiting superior storage stability.

### [Test Example 3]

A film was prepared from the clear paint obtained in each of Example 1 and Comparative Example 3 in a manner similar to that described in Test Example 1. With regard to the films, a weather resistance test was carried out by means of a sign shine weatherometer (produced by Suga tester Co., Ltd.) according to the method defined in JIS K5400.

The results are shown in Table 3.

**Table 3**

| | | Example 1 | Comparative Example 3 |
|---|---|---|---|
| Clear paint | | C-1 | C-8 |
| Ingredients | Resin | A-1 | A-1 |
| | Secondary diamine or enamine derivative | N,N'-dimethyl-1,6-diaminohexane | 1,6-diaminohexane |
| Gloss retention (%) | | 85.3 | 38.3 |
| (Test time*) | | (304) | (153) |

| | | | |
|---|---|---|---|
| * Test time units are in hours. | | | |

It can be seen from Table 3 that the film obtained from the composition (C-1) according to the present invention exhibits superior weather resistance as compared with the film obtained from the comparative composition (C-8) according to the Comparative Example.

### Industrial Applicability

According to the present invention, the compositions which are useful for use in coating materials, adhesives, sealants, sealing agents, or the like are provided.

## Claims

1. A composition comprising a compound having at least one 5-membered-ring dithiocarbonate group represented by general formula (I): 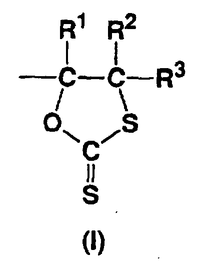 (in the formula, R¹, R², and R³ are identical or different, and represent a hydrogen atom or lower alkyl), and a secondary diamine represented by general formula (II): 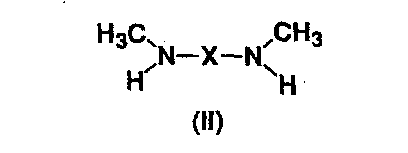 (in the formula, X represents alkylene having 4 to 20 carbon atoms) or an enamine derivative thereof.

2. The composition according to Claim 1, wherein the compound having at least one 5-membered-ring dithiocarbonate group is a polymer having at least one 5-membered-ring dithiocarbonate group.

3. The composition according to Claim 1 or 2, wherein the enamine derivative is obtainable from the secondary diamine represented by the general formula (II) and a ketone compound.

4. The composition according to Claim 1 or 2, wherein X in the general formula (II) represents alkylene having a straight-chain alkylene moiety having 4 to 12 carbon atoms between the nitrogen atoms positioned at both terminals of the alkylene.

5. The composition according to Claim 2, wherein the polymer having at least one 5-membered-ring dithiocarbonate group is a copolymer.

6. The composition according to Claim 5, wherein the copolymer is a vinyl copolymer.

7. The composition according to Claim 6, wherein the vinyl copolymer includes a structural unit represented by general formula (III): 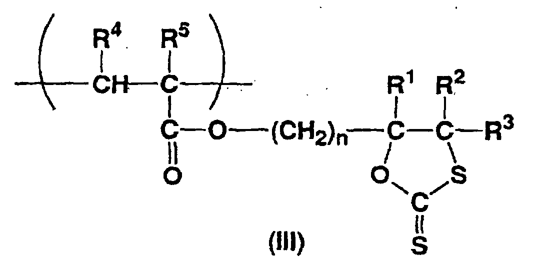 (in the formula, R¹, R², and R³ have the same definitions as described above, R⁴ and R⁵ are identical or different, and represent a hydrogen atom or lower alkyl, and n represents an integer of 1 to 4).

8. The composition according to Claim 1, wherein the compound having at least one 5-membered-ring dithiocarbonate group is a compound represented by general formula (IV): 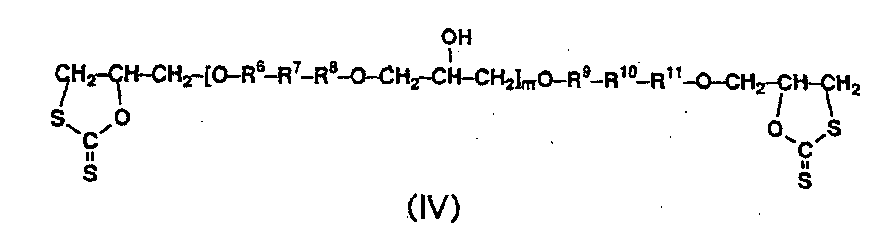 (in the formula, R⁶, R⁸, R⁹, and R¹¹ are identical or different, and represent phenylene wherein 1 to 4 hydrogen atoms may independently be substituted with a halogen atom, or cyclohexylene, R⁷ and R¹⁰ are identical or different, and represent methylene, C(CH₃)₂, an oxygen atom, carbonyl, a sulfur atom, or SO₂, and m represents an integer of 1 to 40).

9. A coating material comprising the composition according to Claim 1 or 2.

10. A hardened product obtained by hardening the composition according to Claim 1 or 2.

11. A two-liquid type coating material comprising an ingredient which includes a compound having at least one 5-membered-ring dithiocarbonate group represented by the general formula (I) as recited in Claim 1 and an ingredient which includes a secondary diamine represented by the general formula (II) as recited in Claim 1.

12. Use, for a coating material, of a mixture of a compound having at least one 5-membered-ring dithiocarbonate group represented by the general formula (I) as recited in Claim 1 and a secondary diamine represented by the general formula (II) as recited in Claim 1 or an enamine derivative thereof.
